Europäisches Patentamt

European Patent Office

Office européen des brevets

(19)

(11) Numéro de publication: **0 288 329**
**A1**

# (12) DEMANDE DE BREVET EUROPEEN

(21) Numéro de dépôt: 88400316.1

(22) Date de dépôt: **12.02.88**

(51) Int. Cl.⁴: **G 03 B 15/06**

(30) Priorité: 24.02.87 FR 8702378

(43) Date de publication de la demande:
26.10.88 Bulletin 88/43

(84) Etats contractants désignés:
**DE ES FR GB IT SE**

(71) Demandeur: **Baliozian, Mardick**
**Ontario Place 10 East Ontario Street**
**60611 Chicago (US)**

(72) Inventeur: **Baliozian, Mardick**
**Ontario Place 10 East Ontario Street**
**60611 Chicago (US)**

(74) Mandataire: **Tony-Durand, Serge**
**Cabinet Tony-Durand 77, rue Boissière**
**F-75116 Paris (FR)**

(54) **Dispositif destiné à assurer l'éclairage latéral d'un sujet placé devant un fond ainsi que l'éclairage de ce fond lui-même, par exemple lors d'une prise de vue de ce sujet par photographie, cinématographie ou similaire.**

(57) Ce dispositif est essentiellement constitué par une série de panneaux réfléchissants (6, 7, 8) attachés sur un fond commun central plein ou évidé ou attachés l'un à l'autre autour d'une surface libre correspondant au fond de l'ensemble. Ces panneaux réfléchissants sont disposés dans des positions relevées et inclinées par rapport au plan du fond de l'ensemble dans des orientations telles que ces panneaux soient aptes à réfléchir, vers le sujet (22) à photographier, ainsi que vers le fond de l'ensemble, la lumière émise par une source frontale (9) de lumière, l'ensemble présentant une forme générale concave.

Ce dispositif peut être utilisé pour assurer l'éclairage latéral d'un sujet placé devant un fond ainsi que l'éclairage de ce fond lui-même, lors d'une prise de vue de celui-ci par photographie, cinématographie ou similaire.

FIG. 2

EP 0 288 329 A1

## Description

**"Dispositif destiné à assurer l'éclairage latéral d'un sujet placé devant un fond ainsi que l'éclairage de ce fond lui-même, par exemple lors d'une prise de vue de ce sujet par photographie, cinématographie ou similaire"**

La présente invention a pour objet un dispositif destiné à assurer l'éclairage de ce fond lui-même, par exemple lors d'une prise de vue de ce sujet par photographie, cinématographie ou similaire. Cependant ce dispositif est également susceptible d'être utilisé pour un usage similaire autour d'un objet lors de la présentation de celui-ci dans une vitrine.

Lorsqu'un sujet déterminé (nature morte ou personne vivante) est photographié, le fond doit apparaitre sur la prise de vue sans que celui-ci comporte des ombres gênantes provenant de ce sujet. Par ailleurs dans certains cas, notamment pour la prise de photographies d'identité, il est nécessaire qu'un fond blanc uniforme apparaisse derrière la tête du sujet photographié. Cependant il convient également que l'image du sujet photographié se détache par rapport au fond et que l'on obtienne, autant que possible, un effet tri-dimensionnel.

L'une des solutions actuellement appliquées pour obtenir un résultat satisfaisant consiste à utiliser, en plus d'une source principale d'éclairage disposée devant le sujet à photographier, plusieurs sources supplémentaires de lumière réparties autour de ce sujet. Certaines de celles-ci sont prévues sur les côtés pour éclairer latéralement le sujet correspondant afin de lui donner plus de relief. Pour une raison similaire, une autre source de lumière supplémentaire est habituellement prévue sur le dessus.

Une autre solution actuellement utilisée consiste à disposer plusieurs panneaux de réflexion indépendants autour de sujet à photographier. Il est alors nécessaire de prévoir différents panneaux individuels de ce genre disposés en divers points appropriés afin d'éclairer le fond utilisé ainsi que les côtés du sujet, et éventuellement la partie supérieure de celui-ci.

Cependant l'une et l'autre de ces deux solutions présentent des inconvénients incontestables. Le premier d'entre eux est évidemment l'augmentation du prix de revient de l'installation du fait de la présence d'un certain nombre de sources supplémentaires de lumière ou de panneaux indépendants de réflexion. Un autre inconvénient réside dans le fait qu'il est nécessaire de régler avec précision la position de ces sources supplémentaires de lumière et de contrôler leur puissance et leur orientation, ou bien encore de régler de façon judicieuse l'orientation particulière de chaque panneau indépendant de réflexion. Or ceci nécessite l'intervention d'un opérateur qualifié et entraîne des pertes de temps.

Par ailleurs, la méthode consistant à utiliser des panneaux individuels de réflexion ne peut pas être appliquée dans un certain nombre de cas, par exemple pour la prise de vue d'une nature morte de faible dimension. En effet dans ce cas les panneaux habituellement utilisés seraient trop volumineux pour pouvoir être disposés autour du sujet à photographier. D'autre part le montage et le réglage de tels panneaux soulèvent des difficultés, car il n'existe pas de supports permettant de régler facilement leur orientation et de les maintenir dans la position voulue.

C'est pourquoi la présente invention a pour but de réaliser un dispositif d'une concenption tout à fait différente qui est destiné à permettre l'obtention d'un fond de près bonne qualité et un éclairage optimum du sujet sans que l'on ait besoin d'avoir recours à des sources de lumière additionnelles ou bien encore à des panneaux individuels de réflexion disposés séparément autour du sujet à photographier. Cependant ce dispositif est également conçu de façon à améliorer encore l'éclairage du sujet à photographier et du fond placé derrière celui-ci.

A cet effet le dispositif selon l'invention est essentiellement constitué par une série de panneaux réfléchissants droits ou incurvés ou à facettes, attachés sur un fond commun central plein ou évidé ou attachés l'un à l'autre autour d'une surface libre correspondant au fond de l'ensemble, ces panneaux réfléchissants étant disposés dans des positions relevées et inclinées par rapport au plan du fond de l'ensemble ou du panneau de fond, dans des orientations telles que ces panneaux soient aptes à réfléchir, vers le sujet à photographier, ainsi que vers le fond de l'ensemble, la lumière émise par une source frontale de lumière, l'ensemble présentant une forme générale concave.

Ainsi le fond prévu et le sujet placé devant celui-ci se trouvent éclairés dans des conditions optimum par des rayons lumineux dirigés tout autour d'eux et qui proviennent en réalité d'une source unique de lumière, en l'occurrence la source principale d'éclairage placée près de l'appareil de prise de vue en regard du sujet à photographier.

Dans une forme de réalisation particulière, le présent dispositif comprend trois panneaux réfléchissants disposés autour d'un panneau de fond ou d'une surface libre corresondant au fond de l'ensemble, à savoir : un panneau réfléchissant destiné à être placé vers le haut, et d'autres panneaux réfléchissants destinés à être disposés de part et d'autre du sujet à photographier.

Dans une autre forme de réalisation le présent dispositif comprend deux panneaux réfléchissants disposés de part et d'autre d'un panneau de fond leur servant de support.

Cependant d'autres particularités et avantages du dispositif selon l'invention apparaitront au cours de la description suivante. Celle-ci est donnée en référence au dessin annexé à simple titre indicatif, et sur lequel :

La figure 1 est une vue en élévation de face d'un dispositif selon l'invention.

Les figures 2 et 3 sont des vues en perspective illustrant deux modes particuliers d'utilisation de ce dispositif.

La figure 4 illustre une forme de réalisation particulière du dispositif selon l'invention et elle représente en plan de dessus les divers éléments constituant le dispositif correspondant, ces éléments étant représentés avant assemblage.

La figure 5 est une vue en élévation illustrant une utilisation particulière du présent dispositif.

Les figures 6 et 7 sont des vues similaires à la figure 4, mais représentant deux autres formes de réalisation du dispositif selon l'invention.

La figure 8 est une vue en perspective illustrant une utilisation particuière du dispositif représenté à la figure 6.

La figure 9 est une vue en détail d'une variante de ce dispositif.

La figure 10 est une vue en coupe selon la ligne X-X de la figure 9.

Les figures 11 et 12 sont des vues en perspective, respectivement de devant et de derrière, d'une autre forme de réalisation encore du dispositif selon l'invention.

La figure 13 est une vue partielle en plan de dessus, à échelle différente d'un détail de cette forme de réalisation.

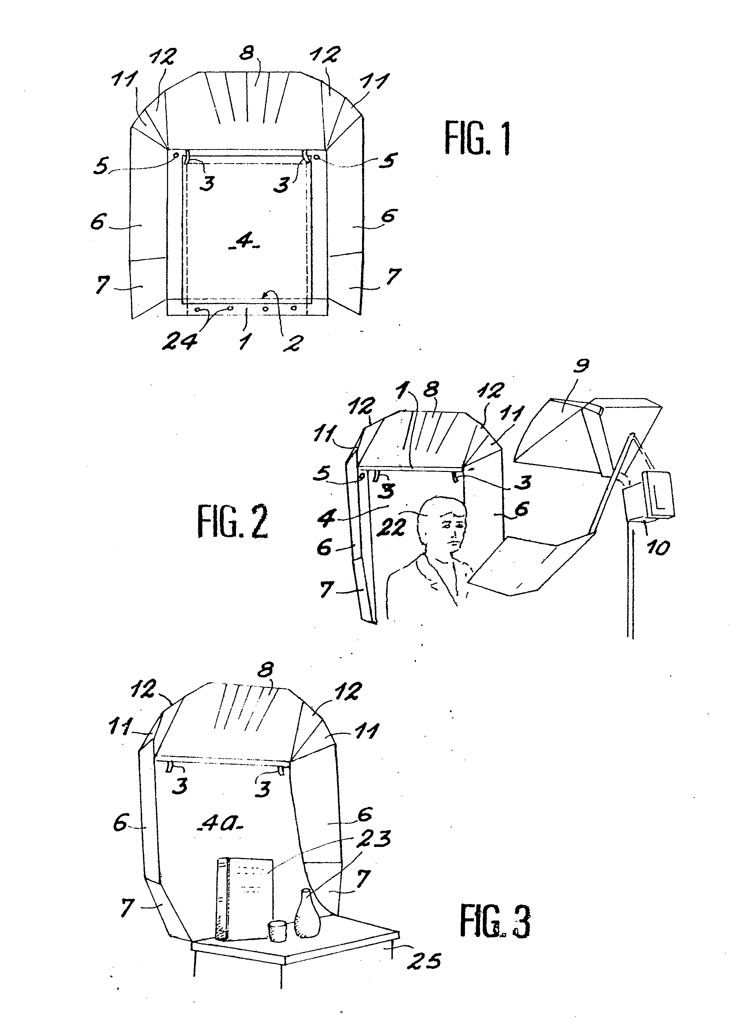

Dans l'exemple représenté à la figure 1, le dispositif selon l'invention comporte plusieurs panneaux réfléchissants attachés l'un à la suite de l'autre, autour d'un cadre 1 dont ils sont solidaires. Ce cadre, qui matérialise le plan du fond de l'ensemble, entoure une surface libre 2 de contour carré ou autre. Lors de la plupart des utilisations du présent dispositif, ce cadre est destiné à être disposé verticalement contre un mur ou fixé sur tout autre support. Or sur son côté supérieur ce cadre est pourvu de pinces 3 ou autres moyens appropriés de fixation permettant de fixer, devant ce cadre, un élément destiné à constituer le fond proprement dit d'une prise de vue, par exemple une feuille 4 de papier ayant les caractéristiques voulues.

Cependant le cadre ainsi prévu comporte également des moyens permettant de le fixer contre un mur ou sur tout support approprié. Ainsi pour sa fixation contre un mur ce cadre peut présenter tout simplement deux trous 5 destinés à recevoir des clous de fixation. Pour une fixation sur un support particulier, par exemple un pied d'appui au sol, il peut être prévu un système d'attache permettant de réaliser une fixation sur un tel support.

Sur chacun de ces côtés latéraux, le cadre 1 porte deux panneaux réfléchissant 6 et 7. Ces panneaux sont redressés et inclinés par rapport au plan du fond de l'ensemble, c'est-à-dire le plan du cadre 1. Par rapport à ce plan, si les angles des panneaux sont réglables par rapport au fond central, il sont en mesure de réfléchir, soit seulement vers le fond proprement dit 4, soit sur le fond 4 ainsi que sur les côtés du sujet à photographier (par exemple la tête 22 d'une personne), soit seulement vers les côtés du sujet, la lumière émise par une source de lumière 9 disposée en face de ce sujet et ce, à quelque distance au-dessus de l'appareil de prise de vue utilisé 10. Ainsi l'ensemble présente une forme générale concave, ou bien encore la forme d'une sorte de cuvette à parois latérales inclinées, qui serait ouverte sur l'un de ses côtés, en l'occurrence son côté inférieur.

La surface des panneaux latéraux 6 et 7 est traitée de façon que ceux-ci aient des caractéristiques appropriées de réflexion de la lumière. A cet effet ces panneaux peuvent avantagement comporter une surface métallisée. Cependant, au lieu de ceci ces panneaux pourraient être munis d'un revêtement de couleur blanche, ce qui serait moins avantageux.

Le bord du cadre 1, destiné à être placé vers le haut, porte un autre panneau réfléchissant 8. Ce panneau supérieur de réflexion est incliné vers l'avant pour former un angle déterminé par rapport au plan du cadre 1, d'une façon similaire aux panneaux latéraux 6 et 7. De plus ce panneau est avantageusement incurvé. L'agencement ainsi prévu est tel que ce panneau, qui se trouve disposé au-dessus du sujet à photographier, est ainsi en mesure de réfléchir, à la fois sur le dessus de ce sujet et vers le fond proprement dit 4, la lumière qui parvient de la source lumineuse frontale 9.

A l'une et l'autre de ses extrémités le panneau supérieur 8 est raccordé aux panneaux latéraux 6 par des facettes intermédiaires 11 et 12 séparées par des lignes de pliage.

L'ensemble des différentes parties ainsi prévues dans le présent dispositif peut être constitué par une pièce unique d'un seul tenant dont la forme particulière est alors obtenue par tout procédé approprié, par exemple par moulage par injection, ou par thermoformage ou formage sous vide lorsque cette pièce est en matière plastique. Cependant cette pièce peut également être réalisée en métal par emboutissage ou par application de tout autre procédé approprié de mise en forme. Bien entendu cette pièce unique pourrait également être réalisée en toute autre matière appropriée, par exemple : bois, etc.

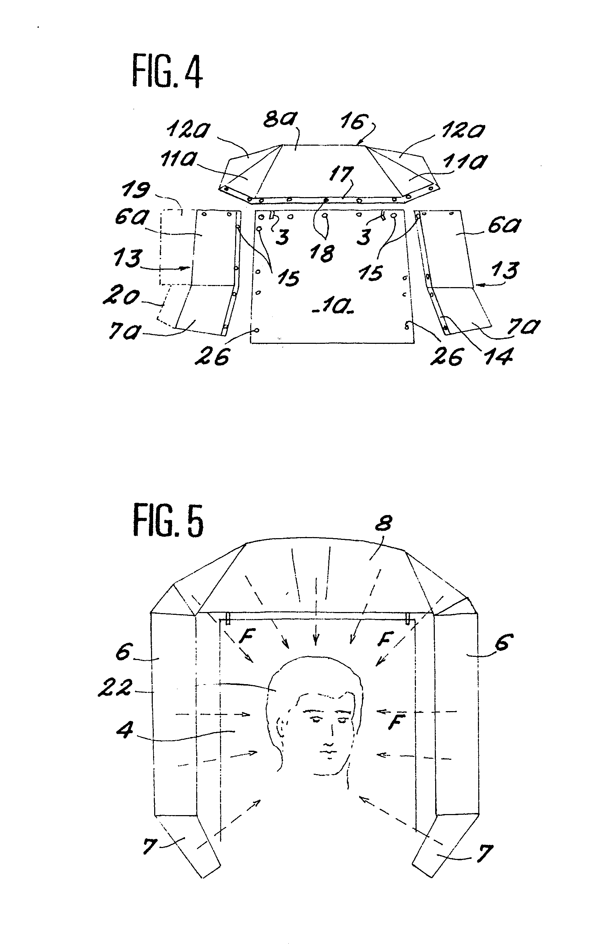

Mais les différentes parties du présent dispositif peuvent également être constituées par des pièces distinctes assemblées les unes aux autres à l'endroit de leurs lignes de jonction. Du reste la figure 4 représente une telle forme de réalisation. Dans celle-ci le cadre 1 est remplacé par un panneau de fond 1a, qui est plein. Quant aux panneaux réfléchissants de chaque côté, ils sont constitués par une pièce 13 formant les deux panneaux correspondants 6a et 7a. Sur son bord destiné à être fixé sur le bord correspondant du panneau de fond 1a, chacune de ces pièces 13 comporte une bande marginale 14 qui fait un angle déterminé par rapport aux panneaux 6a et 7a afin de pouvoir être fixée à plat sur le panneau de fond 1a. Cette fixation est assurée par des boutons pression complémentaires 15 prévus sur l'une et l'autre des deux parties correspondantes. Ainsi lorsque les deux pièces 13 sont fixées en place, les panneaux 6a et 7a se trouvent maintenus inclinés par rapport au panneau de fond 1a, et ce dans l'orientation voulue pour assurer la réflexion de la lumière dans les conditions décrites précédemment.

Quant au panneau réfléchissant supérieur 8a de ce dispositif, il est constitué par une pièce distincte 16 formant également des facettes 11a et 12a, prévues aux extrémités de ce volet. De même que pour les deux pièces latérales 13, cette pièce 16 comporte une bande marginale 17 destinée à être fixée sur le bord supérieur du panneau de fond 1a ainsi que sur le bord supérieur de ces deux pièces latérales 13. Cette bande forme donc un angle déterminé par rapport au panneau 8a ainsi que par rapport aux facettes 11a d'extrémité afin que ce panneau et ces facettes soient maintenus dans l'inclinaison voulue lorsque la pièce 16 est fixée sur le panneau de fond 1a. Cette fixation peut être réalisée au moyen de boutons pression complémentaires 18 ou de tous autres moyens appropriés.

La solution ainsi prévue dans la forme de réalisation selon la figure 4 permet de conserver le dispositif en plusieurs pièces distinctes pouvant être pliées à plat lorsque ce dispositif n'est pas utilisé, ainsi que lors de son stockage et de son transport avant mise en vente. Ceci a donc l'avantage de permettre une réduction considérable d'encombrement pendant ce temps.

Ainsi qu'il a déjà été indiqué, le panneau de fond 1a, prévu dans cette forme de réalisation particulière, n'est pas évidé de sorte qu'il peut constituer par lui-même un fond approprié pour une prise de vue photographique, sa surface étant choisie ou traitée en conséquence. A cet effet, elle peut comporter un revêtement de couleur blanche ou être fabriquée en matière plastique blanche. Cependant le panneau 1a peut également être pourvu de pinces de fixation 3 à sa partie supérieure afin de pouvoir rapporter un élément amovible de fond, par exemple une feuille de papier 4 comme dans le cas précédent.

Le panneau 8a, qui présente une forme incurvée, peut être constitué par une feuille plane en matériau flexible susceptible d'être mis en forme aisément, des rainures de pliage pouvant être avantageusement prévues. Cependant ce panneau peut également être constitué par une pièce initialement mise en forme ou moulée dans la forme désirée.

Dans la forme de réalisation représentée sur la figure 1, il est également possible de prévoir un panneau de fond plein au lieu d'un cadre évidé 1 comme décrit précédemment. S'il est plein, ce panneau peut être réalisé pour servir par lui-même de fond photographique.

Comme déjà mentionné, le présent dispositif est plus spécialement destiné à être utilisé pour réaliser à la fois un fond derrière un sujet déterminé et l'éclairage optimum de celui-ci lors d'une prise de vue de ce sujet. La figure 2 illustre le cas de la réalisation d'un portrait photographique. Dans ce cas, le dispositif selon l'invention est placé derrière la tête 22 du sujet à photographier, le cadre 1 du fond étant disposé dans une position essentiellement verticale.

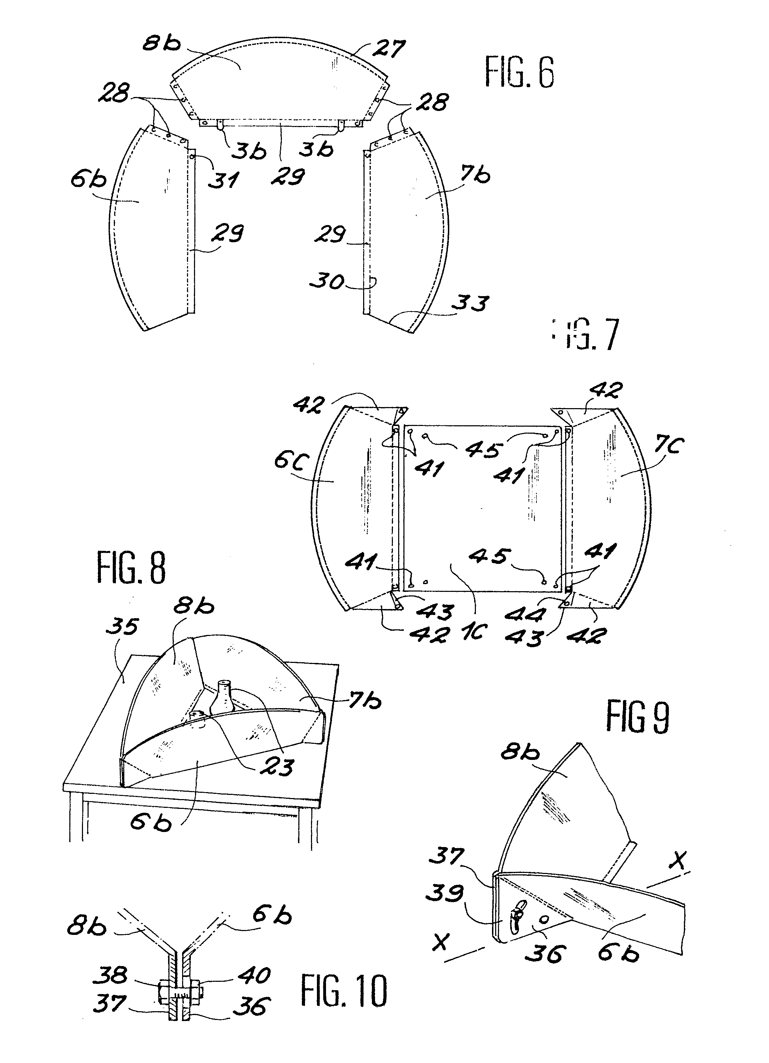

Lorsque ce dispositif est ainsi en place, le panneau supérieur réfléchissant 8 se trouve disposé au-dessus de la tête du sujet, cependant que les panneaux réfléchissants latéraux 6 et 7 sont placés de part et d'autre de cette tête. Ainsi certains rayons lumineux, qui proviennent de la source frontale 9 de lumière, sont réfléchis par les panneaux latéraux 6 et 7 sur le fond 4 proprement dit. D'autres rayons lumineux provenant de cette même source de lumière sont réfléchis par le panneau supérieur 8 sur le dessus de la tête 22 du sujet ainsi que sur le fond 4. Dans ces conditions la tête du sujet à photographier est éclairée sur tout son pourtour et elle "baigne" en quelque sorte dans la lumière. Quant au fond 4 il est lui-même parfaitement éclairé derrière la tête du sujet, ce qui évite l'existence d'ombres portées dues à la tête de celui-ci, comme cela aurait été le cas sans la présence des divers panneaux réfléchissants 6, 7 et 8 du dispositif selon l'invention. Du reste les différentes flèches F portées sur la figure 5 illustrent la façon dont les rayons lumineux sont renvoyés par les différents panneaux réfléchissants tout autour de la tête 22 du sujet et vers le fond 4 placé derrière cette tête. A ce sujet il convient de noter qu'en raison de réflexions successives des rayons lumineux, il y a en quelque sorte accroissement de la quantité de lumière reçue par le sujet à photographier ainsi que par le fond 4.

La figure 3 illustre l'utilisation du dispositif selon l'invention pour la photographie d'objets 23 de faibles dimensions disposés sur une tablette 25 ou similaire. Dans un tel cas le présent dispositif est fixé verticalemenmt au-dessus de cette tablette. Contre le cadre 1 du fond ou contre le panneau de fond 1a, il est alors disposé une feuille rapportée 4a, destinée à constituer le fond proprement dit et qui présente une longueur suffisante pour s'étendre également au dessus de la tablette 25, comme représenté à la figure 3. On obtient ainsi un fond continu qui s'étend à la fois derrière les objets 23 à photographier et au-dessous de ceux-ci. Bien entendu l'appareil de prise de vue 10 et la source frontale de lumière 9 sont alors installés en face des objets à photographier d'une façon similaire à celle prévue dans le cas illustré à la figure 2. On obtient donc de la sorte les mêmes effets avantageux en ce qui concerne l'éclairage du fond 4a et celui des objets à photographier.

A ce sujet il faut observer que, dans un cas comme dans l'autre, la conception du dispositif selon l'invention permet que les prises de vue soient réalisées par un opérateur non qualifié. En effet il n'y a aucun réglage à effectuer pour la prise de vue de portraits d'identité puisque les divers panneaux réfléchissants 6, 7 et 8 sont, par construction, susceptibles d'être fixés au préalable dans les positions exactes voulues pour obtenir un résultat optimum. Cependant, pour des portraits avec un éclairage plus recherché, l'opérateur a la possibilité de régler l'inclinaison des panneaux réfléchissants.

Bien entendu, il est possible d'utiliser des fonds de caractéristiques différentes suivant la nature du sujet ou des objets à photographier, puisqu'il suffit de changer la feuille amovible 4 ou 4a constituant ce fond. Cependant lorsqu'on utilise un dispositif comportant un panneau de fond 1a qui est plein, celui-ci peut alors constituer par lui-même le fond photographique pour la prise de vue.

Par ailleurs, les panneaux latéraux 6-7 ou 6a-7a peuvent éventuellement porter des volets réfléchissants additionnels 19 et 20, comme représenté pour certains d'entre eux sur la figure 4. Ces volets additionnels peuvent être fixés à demeure ou au contraire de façon amovible pour pouvoir être utilisés ou non selon les cas. De plus, l'agencement de ces panneaux et des panneaux 6 peut être avantageusement tel que l'orientation de ces volets soit réglable à volonté, par exemple par articulation le long de leur ligne de jonction avec les panneaux, des moyens d'immobilisation appropriés étant prévus.

La figure 6 représente une autre forme de réalisation du dispositif selon l'invention. Dans celle-ci, ce dispositif se compose de trois panneaux réfléchissants 6b, 7b et 8b qui sont destinés à être assemblés autour d'une surface libre de section carrée ou rectangulaire correspondant au fond proprement dit de la photographie à réaliser.

Après assemblage, soit à l'usine, soit sur place, l'ensemble peut être disposé, soit contre un mur ou autre paroi verticale, soit fixé sur un pied, en plaçant le panneau 8b vers le haut, cependant que les panneaux 6b et 7b sont disposés sur l'un et l'autre côté. Le fond proprement dit peut être constitué par une feuille de papier 4 ou 4a placée entre ces divers panneaux. A cet effet le bord inférieur du panneau supérieur 8b est pourvu de pinces 3b permettant la fixation d'une telle feuille de papier ou similaire.

Les trois panneaux 6b, 7b et 8b ont un contour tel qu'après assemblage ils se trouvent disposés dans des plans inclinés par rapport au plan du fond de l'ensemble. A cet effet, le contour de chacun de ces panneaux présente la forme générale d'un trapèze dont la grande base 27 est dirigée vers l'extérieur et possède avantageusement une forme courbe. Si ces trois panneaux ne sont pas préassemblés, à l'endroit de leur lignes de jonctions, des moyens pour les assembler sont prévus tels que des boutons pression 28, ou autres organes complémentaires d'assemblage, qui sont disposés sur les bords en regard.

De préférence la petite base de chacun des panneaux réfléchissants porte une bande rectiligne 29 rattachée au panneau correspondant par une ligne d'articulation 30 servant aussi comme charnière. Après assemblage de ces panneaux, ces trois bandes 29 se trouvent disposées dans le plan du fond de l'ensemble et elles constituent en quelque sorte un encadrement de ce fond. Des boutons pression 31 permettent d'assembler ces bandes entre elles dans les coins de cet encadrement.

Le dispositif ainsi constitué peut être disposé sur un pied de suport ou contre un mur ou autre paroi verticale pour être utilisé de la même façon que les dispositifs représentés aux figures 2 et 3 pour la photographie de la tête d'une personne ou la photographie d'objets déterminés. Cependant pour cette dernière application, il peut également être utilisé de la façon représentée à la figure 8. Dans un tel cas, les trois panneaux réfléchissants 6b, 7b et 8b sont attachés les uns à la suite des autres sans interruption pour former en quelque sorte un tronc de pyramide placé sur une table 35 servant de support aux objets 23 à photographier, ces derniers étant disposés dans l'espace laissé libre entre les trois panneaux réfléchissants 6b, 7b et 8b. Le fond photographique de l'ensemble peut être constitué par la surface supérieure de la table 35 si cette surface convient. Cependant il est également possible de disposer une feuille de papier ou autre matériau approprié sur cette table avant la mise en place des objets à photographier afin de servir de fond à l'ensemble.

Les figures 9 et 10 illustrent un détail d'une variante d'exécution du dispositif représenté à la figure 6. Dans cette variante chacun des panneaux latéraux 6b et 7b est réuni au panneau supérieur 8b par l'intermédiaire de moyens permettant une modification de l'orientation de ces panneaux latéraux. Dans l'exemple représenté, l'extrémité supérieure de chaque panneau latéral 6b ou 7b comporte un volet articulé 36 qui est accolé à un volet similaire 37 porté par le panneau réfléchissant supérieur 8b. Ces deux volets sont réunis par un boulon 38 qui est porté par l'un de ces volets et peut coulisser dans une fente courbe 39 de l'autre volet. Ceci permet donc de modifier l'inclinaison de chaque panneau latéral 6b ou 7b pour le placer dans une position plus ou moins redressée par rapport au plan du fond de l'ensemble. Un écrou 40 vissé sur le boulon 38 assure le blocage de chaque panneau latéral dans l'orientation voulue.

Cet agencement permet de modifier l'orientation des panneaux latéraux 6b et 7b en fonction des effets désirés. Cependant les opérations de réglage sont très faciles à réaliser et ne nécessitent pas l'intervention d'un opérateur qualifié comme cela est le cas lors de l'utilisation de panneaux individuels réfléchissants qui doivent être chacun disposé dans une position et une orientation particulière.

La figure 7 représente une autre forme de réalisation encore du dispositif selon l'invention. Dans celle-ci le dispositif correspondant comporte simplement deux panneaux réfléchissants 6c et 7c qui sont analogues aux panneaux 6b et 7b de la forme de réalisation selon la figure 6. Cependant ce dispositif est fixé sur un panneau de fond 1c qui est destiné à servir de support aux deux panneaux latéraux 6c et 7c, ceux-ci étant fixés sur les bords correpondants de ce panneau de fond au moyen de boutons pression d'assemblage 41.

De plus il est prévu des moyens appropriés permettant de maintenir les deux panneaux 6c et 7c dans des positions redressées par rapport au fond de l'ensemble. Dans l'exemple représenté, chaque extrémité de ces panneaux latéraux porte un volet articulé 42 pourvu d'une embase articulée 43. Or cette embase est munie d'un bouton pression 44 destiné à être accouplé avec un organe complémentaire 45 porté par le fond 1c. Lorsque cet accouplement est réalisé, les deux panneaux 6c et 7c se trouvent donc maintenus dans des positions redressées. Mais tous autres moyens appropriés pourraient être prévus pour assurer cette fonction, par exemple des équerres ou autres organes d'appui disposés à l'extérieur.

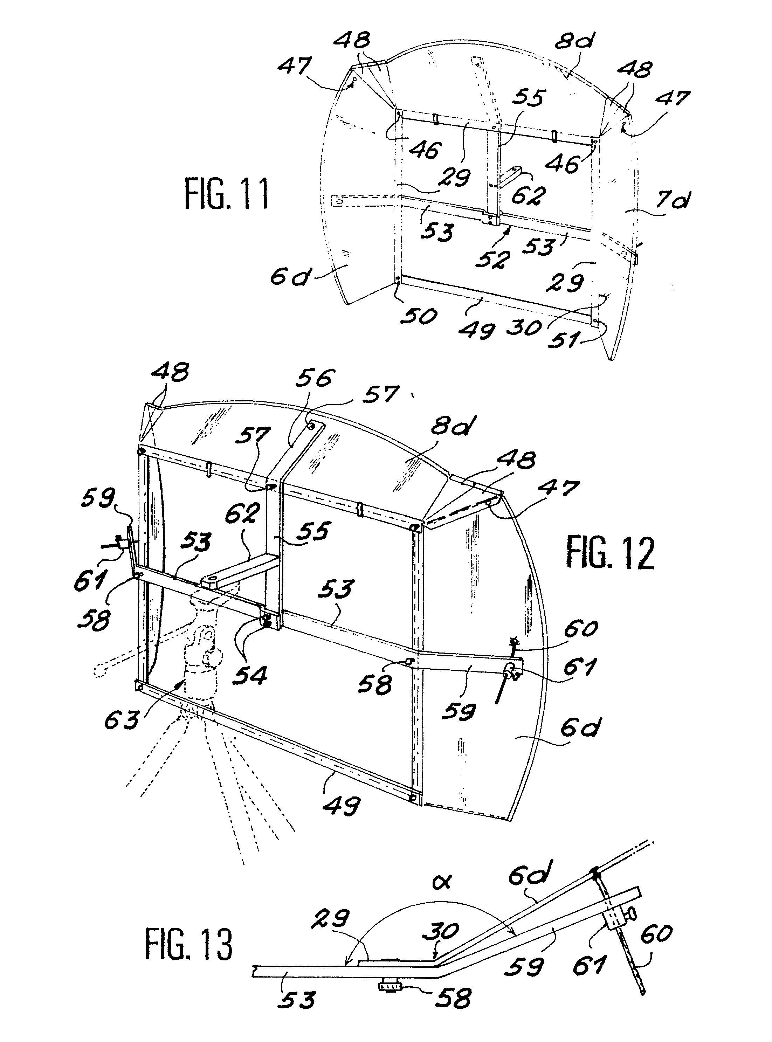

Les figures 11 à 13 représentent une variante de la forme de réalisation selon la figure 6. Dans cette variante, le dispositif est également constitué par trois panneaux réfléchissant 6d, 7d et 8d comportant une bordure interne 29 par rapport à laquelle chacun s'articule par une ligne de pliage 30. Les deux panneaux latéraux 6d et 7d sont attachés à demeure, à l'une ou l'autre extrémités, du panneau supérieur 8d au moyen d'un axe d'articulation 46. De plus ils sont attachés par un bouton pression 47 à des petits volets intermédiaires 48 portés par l'une et l'autre extrémités du panneau supérieur 8d. Il suffit de démonter les boutons pression 47 pour pouvoir replier les trois panneaux 6d et 7d les uns au dessus des autres. Cependant les petits volets intermédiaires pourraient éventuellement être supprimés.

Cependant à leur extrémité inférieure les deux panneaux latéraux 6d et 7d sont réunis par une traverse rigide 49 dont une extrémité est attachée à demeure sur l'un de ces panneaux par l'intermédiaire d'un axe d'articulation 50. Quant à son extrémité opposée, elle est attachée de façon amovible sur l'autre panneau latéral, et ce par l'intermédiaire d'un bouton pression 51. Ainsi lors du repliage de l'ensemble il suffit de démonter ce bouton pression.

De plus il est prévu une ossature de rigidification, et éventuellement de support, de l'ensemble. Cette ossature comprend une autre traverse horizontale 52 disposée à mi-hauteur. Celle-ci est constituée par deux réglettes 53 solidarisées de façon amovible par des vis et écrous 54 au milieu de l'ensemble. Les vis et écrous prévus à cet endroit assurent également la solidarisation de cette traverse avec un montant vertical 55 dont l'extrémité supérieure 56 s'étend derrière le panneau supérieur 8d. Cette extrémité est coudée à l'angle voulu compte tenu de l'inclinaison prévue pour ce panneau et elle est fixée sur ce panneau de façon amovible au moyen de vis et écrou 57.

Quant aux deux barrettes 53 constituant la traverse médiane 52, elles sont fixés de façon amovible au dos des bordures 29 des panneaux latéraux 6d et 7d, et ce par l'intermédiaire de vis et écrous 58. Les extrémités 59 de ces barrettes s'étendent derrière l'un et l'autre panneaux latéraux. Cependant elles sont coudées à un angle α qui correspond à l'angle de déploiement maximum prévu pour les panneaux latéraux. De plus sur chacun de ceux-ci est attaché un câble 60 ou similaire passant dans un collier de blocage 61 porté par l'extrémité 59 de la barrette 53 correspondante. Ainsi il est possible de modifier l'inclinaison des panneaux latéraux et de les immobiliser dans l'inclinaison voulue. Cependant tout autre moyen approprié pourrait être prévu pour assurer cette immobilisation et le réglage de l'inclinaison des panneaux latéraux.

Le montant 55 de l'ossature ainsi prévue porte à l'arrière une patte 62 par l'intermédiaire de laquelle cette ossature peut être fixée sur un support approprié, par exemple l'extrémité supérieure d'un pied pliant ou télescopique 63 du type de ceux utilisé en photographie.

Le dispositif ainsi constitué, de même que le dispositif de la figure 7, peut être utilisé de la même façon que les dispositifs représentés aux figures 2 et 3 pour la photographie de la tête d'un sujet ou la photographie d'objets déterminés.

Suivant les formes de réalisation prévues, le dispositif selon l'invention peut donc comporter un nombre plus ou moins grand de panneaux réfléchissants disposés autour de la surface qui est destinée à matérialiser le fond de l'ensemble, ces panneaux étant soient attachés directement les uns à la suite des autres (cas des figures 1 à 6), soit reliés indirectement par l'intermédiaire d'un panneau de fond (cas de la figure 7).

Par ailleurs, selon les formes de réalisation, le dispositif selon l'invention peut comporter un panneau de fond (cas des figures 4 et 7), ou bien être dépourvu de tout panneau de fond (cas des figures 1 et 6), un encadrement 1 étant alors avantageusement prévu dans le plan du fond de l'ensemble sans que cela soit indispensable. Cet encadrement peut alors porter un organe permettant de le fixer sur un pied servant de support à l'ensemble.

Dans tous les cas considérés ci-dessus, l'ensemble constitué par le présent dispositif présente toujours une forme générale concave, ou la forme d'une sorte de cuvette à parois inclinées qui serait ouverte sur un ou plusieurs de ses côtés.

Enfin, il convient de rappeler que l'utilisation du dispositif selon l'invention ne se borne pas à la réalisation d'un fond et d'un encadrement réfléchissant derrière et autour d'un sujet déterminé lors d'une prise de vue photographique ou similaire. En effet ce dispositif peut également être utilisé comme fond et encadrement réfléchissant derrière et autour de certains objets dans une vitrine d'exposition, par exemple un étalage de magasin, une ou plusieurs sources de lumière étant prévues en regard de l'ensemble.

**Revendications**

1°- Dispositif destiné à assurer l'éclairage latéral d'un sujet placé devant un fond ainsi que l'éclairage de ce fond lui-même, lors d'une prise de vue de celui-ci par photographie, cinématographie ou similaire caractérisé en ce que ce dispositif est essentiellement constitué par une série de panneaux réfléchissants (6, 7, 8 ou 6a, 7a, 8a ou 6b, 7b, 8b, ou 6c, 7c) droits ou incurvés ou à facettes, attachés sur un fond commun central (1, 1a, 1c) plein ou évidé ou attachés l'un à l'autre autour d'une surface libre correspondant au fond de l'ensemble, ces panneaux réfléchissants étant disposées dans des positions relevées et inclinées par rapport au plan du fond de l'ensemble ou du panneau de fond (1, 1a, 1c) dans des orientations telles que ces panneaux soient aptes à réfléchir, vers le sujet (22 ou 23) à photographier, ainsi que vers le fond de l'ensemble, la lumière émise par une source frontale (9) de lumière, l'ensemble présentant une forme générale concave.

2°- Dispositif selon la revendication 1, caractérisé en ce que le dispositif est pourvu de moyens de fixation (3, 3b) aptes à permettre la fixation d'un élément rapporté (4, 4a) susceptible de constituer le fond proprement dit de prise de vue.

3°- Dispositif selon l'une des revendications précédentes, caractérisé en ce que les panneaux réfléchissants (6, 7, 8) sont attachés d'une façon permanente l'un à l'autre et/ou sur le fond commun à ces panneaux.

4°- Dispositif selon les revendications 1 et 2, caractérisé en ce que les panneaux réfléchissants (6a, 7a, 8a ou 6b, 7b, 8b ou 6c, 7c) sont amovibles mais sont pourvus de moyens d'assemblage pour les attacher l'un à l'autre ou de les fixer sur le fond commun.

5°- Dispositif selon les revendications précédentes, caractérisé en ce que les panneaux réfléchissants (6b, 7b ou 6c, 7c) comportent des moyens permettant de régler leur inclinaison par rapport aux panneaux contigus ou par rapport au fond commun.

6°- Dispositif selon les revendications précédentes, caractérisé en ce que les panneaux réfléchissants peuvent être pliés à plat l'un contre l'autre pour faciliter leur déplacement.

7°- Dispositif selon l'une des revendications précédentes, caractérisé en ce que les panneaux réfléchissants (6, 7, 8) ont des volets réfléchissants additionnels (19 et 20) avec des moyens appropriés prévus pour immobiliser chaque volet réfléchissant additionnel dans l'orientation voulue.

9°- Dispositif selon l'une des revendications 1 à 7, caractérisé en ce qu'il comprend trois panneaux réfléchissants disposés autour d'un panneau de fond (1a, 1c) ou d'une surface libre correspondant au fond de l'ensemble, à savoir un panneau réfléchissant (8, 8a, 8b, 8d) destiné à être placé vers le haut, et deux panneaux réfléchissants (6 ou 6a, ou 6b, 7b ou 6d, 7d) destinés à être disposés de part et d'autre du sujet à photographier (22, 23).

9°- Dispositif selon l'une des revendications 1 à 7, caractérisé en ce qu'il comprend deux panneaux réfléchissants (6c, 7c) disposés de part et d'autre d'un panneau de fond (1c) leur servant de support.

10°- Dispositif selon l'une des revendications précédentes, caractérisé en ce qu'il comporte une ossature rigide constituée par des éléments démontables (53, 55) portant des moyens d'immobilisation des panneaux réfléchissants (6d, 7d, 8d) dans l'inclinaison voulue, avec possibilité de réglage ou non, cette ossature portant un organe (62) par l'intermédiaire duquel elle peut être fixée sur un support approprié (63).

0288329

FIG. 1

FIG. 2

FIG. 3

**FIG. 4**

**FIG. 5**

FIG. 6

FIG. 7

FIG. 8

FIG 9

FIG. 10

0288329

FIG. 11

FIG. 12

FIG. 13

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.4) |
|---|---|---|---|
| A | DE-C- 494 646 (SIEMENS & HALSKE) <br> * Page 2; figures 3,4 * | 1,5 | G 03 B 15/06 |
| A | GB-A- 771 805 (GENERAL ELECTRIC CO. LTD) <br> * Pages 2,3; figures 1-3 * | 1 | |
| A | DE-A-3 443 840 (H. MÜHLDORFER) <br> * Pages 6-8; figures 1-5 * | 1 | |

|  |  |
|---|---|
|  | **DOMAINES TECHNIQUES RECHERCHES (Int. Cl.4)** |
|  | G 03 B 15/06 |

Le présent rapport a été établi pour toutes les revendications

| Lieu de la recherche | Date d'achèvement de la recherche | Examinateur |
|---|---|---|
| LA HAYE | 10-06-1988 | BOEYKENS J.W. |

EPO FORM 1503 03.82 (P0402)